(19)

**Europäisches Patentamt**
**European Patent Office**
**Office européen des brevets**

(11)  **EP 4 664 186 A1**

(12)  **EUROPEAN PATENT APPLICATION**
published in accordance with Art. 153(4) EPC

(43) Date of publication:
**17.12.2025   Bulletin 2025/51**

(21) Application number: **24753327.6**

(22) Date of filing: **05.02.2024**

(51) International Patent Classification (IPC):
*G02B 27/01* (2006.01)    *B60J 1/00* (2006.01)
*B60J 1/02* (2006.01)    *B60K 35/23* (2024.01)
*C03C 27/12* (2006.01)

(52) Cooperative Patent Classification (CPC):
**B32B 17/00; B60J 1/00; B60J 1/02; B60K 35/23;
G02B 27/01**

(86) International application number:
**PCT/JP2024/003786**

(87) International publication number:
**WO 2024/166884 (15.08.2024 Gazette 2024/33)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **06.02.2023   JP 2023016468**

(71) Applicant: **Nippon Sheet Glass Company, Limited**
**Tokyo 108-6321 (JP)**

(72) Inventors:
• **SHIMOMURA, Takahiro**
  **Tokyo 108-6321 (JP)**
• **HOTTA, Hirofumi**
  **Tokyo 108-6321 (JP)**

(74) Representative: **Howe, Richard Colin Thomson et
al**
**Pilkington Group Limited**
**European Technical Centre**
**Hall Lane**
**Lathom**
**Ormskirk, Lancashire L40 5UF (GB)**

(54)  **WINDSHIELD**

(57)    Provided is a windshield having an ARHUD region for displaying, superimposed on an outside scene visible from outside a vehicle, a first image that is radiated from a head-up display device with respect to the outside scene, wherein the windshield comprises a plate-shaped glass member having the ARHUD region, and the following expression is satisfied when X1 is defined as the slope difference in the vertical direction in the ARHUD region: X1 < 0.0008 (rad/mm), where a total of $m \times n$ points Aij ($1 \leq i \leq m$, $1 \leq j \leq n$) are defined that are arranged in a lattice with m points in the horizontal direction and n points in the vertical direction, and, when the angle of inclination between a point Aij and a point Ai(j+1) (where $1 \leq i \leq m$ and $1 \leq j \leq n - 1$) adjacent in the vertical direction on the vehicle-inside surface of the glass member is defined as θAij (rad), X1 is the value obtained by dividing the difference between any θAij and another θAij (excluding those in the same position in the horizontal direction) by the distance between the two points in the vertical direction.

FIG. 8

EP 4 664 186 A1

**Description**

Technical Field

The present invention relates to a windshield.

Background Art

Conventionally, a head-up display device (HUD device) that irradiates a windshield of a vehicle with image light to project information such as a vehicle speed has been proposed. With use of the HUD device, a driver can check the vehicle speed by referring to the information projected on the windshield instead of an in-vehicle instrument such as a speedometer. Therefore, the driver is not required to turn the eyes greatly to the front during driving. Accordingly, the HUD device is advantageous in that it can improve safety during driving.

In addition, in recent years, a technique of superimposing an image formed by image light emitted from a HUD device on an outside view of a vehicle has been proposed. This technique contributes to navigation by superimposing an image of an arrow or the like on a road, a building, or the like included in an outside view using an augmented reality technology.

For example, PTL 1 proposes a technique for correcting a positional deviation of an augmented reality image (hereinafter referred to as an AR image) in response to a change in posture due to a speed change of a vehicle.

Citation List

Patent Literature

PTL 1: Japanese Patent Laid-open Publication No. 2021-104803

Summary of Invention

Technical Problems

Unfortunately, there are limitations on the above-mentioned correction of the positional deviation of an AR image in response to a speed change of a vehicle, and in a case where there is a defect such as distortion in the windshield, it is difficult to eliminate the positional deviation even if the correction is performed. For example, when there is a defect of shape such as distortion in the windshield, not only positional deviation but also distortion of the AR image itself may occur.

The present invention has been made in order to solve the above-mentioned problems, and an object of the present invention is to provide a windshield capable of reducing distortion of an AR image.

Solution to Problems

Item 1. A windshield having an ARHUD region for displaying, superimposed on an outside view seen from outside a vehicle, a first image emitted from a head-up display device,

the windshield including a glass member having a plate shape and having the ARHUD region, wherein
in the ARHUD region, when slopes relating to a surface shape of the glass member are defined and a longitudinal difference between the slopes is defined as X1, the windshield satisfies an expression shown below:

$$X1 < 0.0008 \ (\text{rad/mm})$$

wherein in the ARHUD region,
when m points in a horizontal direction and n points in a perpendicular direction, that is, a total of m $\times$ n points Aij (1 $\leq$ i $\leq$ m, 1 $\leq$ j $\leq$ n) arranged in a lattice pattern are defined, and
in a surface of the glass member on a vehicle interior side, an inclination angle, that is, a slope between perpendicularly adjacent points Aij and Ai(j + 1) (1 $\leq$ i $\leq$ m, 1 $\leq$ j $\leq$ n - 1) is defined as $\theta$Aij (rad),
X1 is a value obtained by dividing a difference between two angles, that is, an arbitrary angle $\theta$Aij and another angle $\theta$Aij (excluding angles at points at an identical position in the horizontal direction) by a distance between two points corresponding to the two angles in the perpendicular direction.

Item 2. The windshield according to item 1, wherein in the ARHUD region, when a lateral difference between the slopes is defined as Y1, the windshield satisfies an expression shown below:

$$Y1 < 0.0003 \text{ (rad/mm)}$$

wherein Y1 is a value obtained by dividing a difference between two angles, that is, an arbitrary angle $\theta A11$ and another angle $\theta Aij$ (excluding angles at points at an identical position in the perpendicular direction) by a distance between two points corresponding to the two angles in the horizontal direction.

Item 3. The windshield according to item 1 or 2, wherein in an outer region other than the ARHUD region, when a longitudinal difference between the slopes is defined as X2, and a lateral difference between the slopes is defined as Y2, the windshield satisfies at least one of expressions shown below:

$$X1 < X2;$$

and

$$Y1 < Y2$$

wherein in the outer region,
when m points in the horizontal direction and n points in the perpendicular direction, that is, a total of m × n points Bij (1 ≤ i ≤ m, 1 ≤ j ≤ n) arranged in a lattice pattern are defined, and
in the surface of the glass member on the vehicle interior side, an inclination angle between perpendicularly adjacent points Bij and Bi, j + 1 (1 ≤ i ≤ m, 1 ≤ j ≤ n - 1) is defined as $\theta Bij$ (rad),
X2 is a value obtained by dividing a difference between two angles, that is, an arbitrary angle $\theta Bij$ and another angle $\theta Bij$ (excluding angles at points at an identical position in the horizontal direction) by a distance between two points corresponding to the two angles in the perpendicular direction, and
Y2 is a value obtained by dividing a difference between two angles, that is, an arbitrary angle $\theta Bij$ and another angle $\theta Bij$ (excluding angles at points at an identical position in the perpendicular direction) by a distance between two points corresponding to the two angles in the horizontal direction.

Item 4. The windshield according to item 3, which satisfies

$$0.0008 \text{ (rad/mm)} < X2 < 0.0015 \text{ (rad/mm)},$$

and

$$0.0003 \text{ (rad/mm)} < Y2 < 0.0010 \text{ (rad/mm)}.$$

Item 5. The windshield according to any one of items 1 to 4, wherein the glass member includes:

an inner glass plate;
an outer glass plate disposed to face the inner glass plate; and
an interlayer film that bonds the inner glass plate and the outer glass plate to each other.

Item 6. The windshield according to item 3, wherein a second image emitted from the head-up display device is displayed in the outer region.

Item 7. The windshield according to any one of items 1 to 6, wherein

in the ARHUD region, the points Aij are defined at a pitch of 20 mm or less, and
when a wedge angle at each of the points Aij is measured in the surface of the glass member on the vehicle interior side by an interferometer (where m and n are each 240 or more), a difference between a maximum value and a minimum value of the wedge angles is 0.32 mrad or less.

Item 8. The windshield according to any one of items 1 to 7, wherein the first image is formed 3 m or more ahead of a driver.

Item 9. The windshield according to any one of items 1 to 8, wherein the ARHUD region has an area of 50 mm × 50 mm or more.

Item 10. The windshield according to any one of items 1 to 9, wherein

the first image is at least one of a character and a figure, and
the first image is superimposed on at least one of a building, a road, a pedestrian, and transportation equipment included in the outside view.

Item 11. The windshield according to any one of items 1 to 10, wherein a height of the first image displayed on the glass member is variable.

Advantageous Effects of Invention

According to the present invention, it is possible to reduce the distortion of an AR image.

Brief Description of Drawings

[Fig. 1] Fig. 1 is a plan view illustrating an embodiment in which a laminated glass for automobiles according to the present invention is applied to a windshield.

[Fig. 2] Fig. 2 is a cross-sectional view of Fig. 1.

[Fig. 3] Fig. 3 is a cross-sectional view of an interlayer film.

[Fig. 4] Fig. 4 is an example of a block diagram of an in-vehicle system.

[Fig. 5] Fig. 5 is a cross-sectional view illustrating display of a first image by a HUD device.

[Fig. 6] Fig. 6 is a front view illustrating display of the first image and a second image by the HUD device.

[Fig. 7] Fig. 7 is a diagram illustrating an arrangement of lattice points in an ARHUD region.

[Fig. 8] Fig. 8 is a graph illustrating a cross-sectional shape of a surface of an inner glass plate on a vehicle interior side along an arbitrary perpendicular line in Fig. 7.

[Fig. 9] Fig. 9 is a diagram illustrating an inclination angle between adjacent points $A_{ij}$ and $A_{ij} + 1$.

[Fig. 10] Fig. 10 is a diagram illustrating a cross-sectional shape of a surface of the inner glass plate on the vehicle interior side along perpendicular lines L2 and L3 in Fig. 7.

[Fig. 11] Fig. 11 is a diagram illustrating distortion of Sample 1.

[Fig. 12] Fig. 12 is a diagram illustrating distortion of Sample 1.

Description of Embodiments

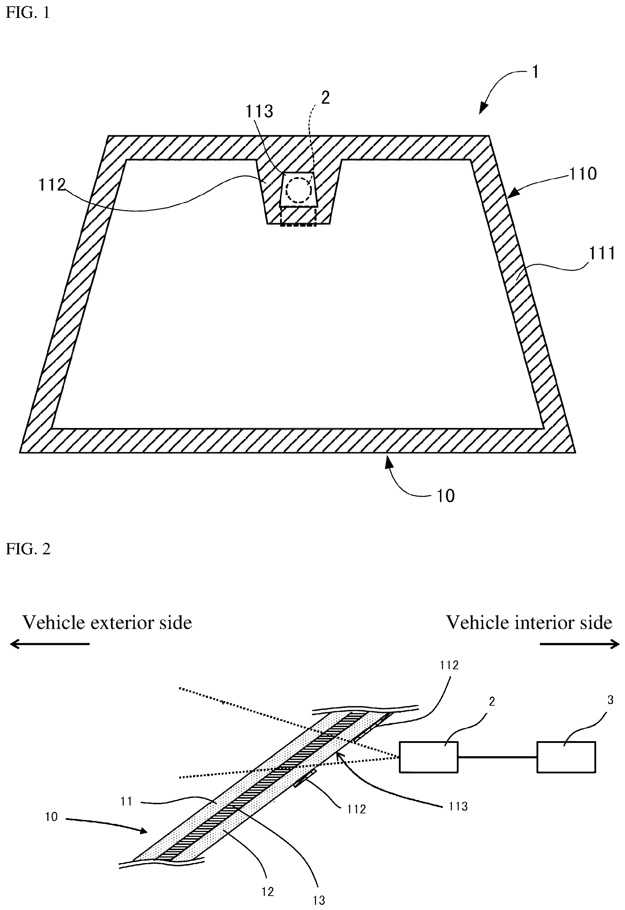

Hereinafter, an embodiment of the windshield of the present invention will be described with reference to the drawings. Fig. 1 is a plan view of the windshield, and Fig. 2 is a cross-sectional view of Fig. 1. Note that, for convenience of description, the vertical direction in Fig. 1 will be referred to as "vertical", "perpendicular", or "longitudinal", and the horizontal direction in Fig. 1 will be referred to as "horizontal". Fig. 1 illustrates a windshield viewed from the vehicle interior side. That is, in Fig. 1, the front side of the sheet is the vehicle exterior side, and the back side of the sheet is the vehicle interior side.

As illustrated in Figs. 1 and 2, a windshield 1 includes a laminated glass 10 having a substantially rectangular shape, and is installed in a vehicle body in an inclined state. A mask layer 110 for shielding the visual field from the outside of the vehicle is laminated on an inner surface of the laminated glass 10 facing the vehicle interior side. In addition, an imaging device 2 incorporating a camera for imaging a situation outside the vehicle is attached to the mask layer 110 via a bracket (not illustrated). The mask layer 110 has an imaging window 113 at a position corresponding to the imaging device 2, and the imaging device 2 can image the situation outside the vehicle through the imaging window 113.

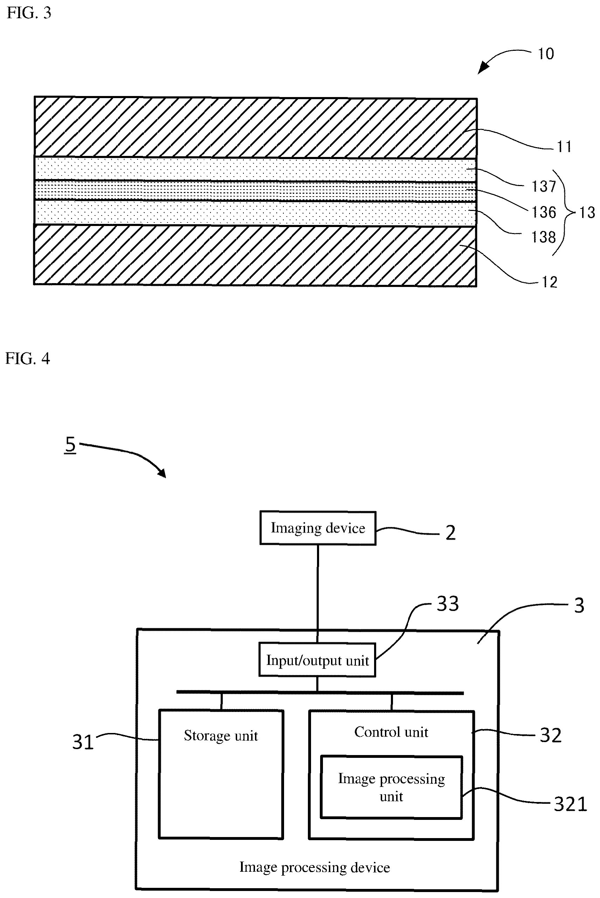

An image processing device 3 is connected to the imaging device 2, and a captured image acquired by the imaging device 2 is processed by the image processing device 3. The imaging device 2 and the image processing device 3 constitute an in-vehicle system 5 (see Fig. 4), and the in-vehicle system 5 can provide various information to a rider according to the processing executed by the image processing device 3.

Furthermore, a head-up display device (hereinafter referred to as a HUD device) 500 is provided in the vehicle. The HUD device 500 irradiates the windshield with image light of a vehicle speed, other characters, figures and the like in order to project information such as the vehicle speed on the windshield. Hereinafter, the components will be described.

<1. Laminated glass>

<1-1. Glass plate>

First, an outer glass plate 11 and an inner glass plate 12 will be described. Known glass plates can be used as the outer glass plate 11 and the inner glass plate 12, and the outer glass plate 11 and the inner glass plate 12 can also be formed using heat-absorbing glass, general clear glass, green glass, dark green glass, or UV green glass. However, it is necessary for these glass plates 11 and 12 to have a visible light transmittance conforming to the safety standards of a country in which the automobile is used. For example, it is possible to achieve a required solar absorptance by the outer glass plate 11, and to make an adjustment so that the visible light transmittance can satisfy the safety standards by the inner glass plate 12. Hereinafter, examples of clear glass, heat-absorbing glass, and soda lime glass will be described.

(Clear glass)

$SiO_2$: 70 to 73 mass%
$Al_2O_3$: 0.6 to 2.4 mass%
CaO: 7 to 12 mass%
MgO: 1.0 to 4.5 mass%
$R_2O$: 13 to 15 mass% (R is an alkali metal)
Total iron oxide in terms of $Fe_2O_3$ (T-$Fe_2O_3$): 0.08 to 0.14 mass%

(Heat-absorbing glass)

The composition of the heat-absorbing glass can be, for example, a composition obtained by setting the percentage of total iron oxide in terms of $Fe_2O_3$ (T-$Fe_2O_3$) to 0.4 to 1.3 mass%, the percentage of $CeO_2$ to 0 to 2 mass%, and the percentage of $TiO_2$ to 0 to 0.5 mass% with respect to the composition of the clear glass as a base, and reducing the skeleton components of the glass (mainly $SiO_2$ and $Al_2O_3$) by an amount equal to the increase of T-$Fe_2O_3$, $CeO_2$, and $TiO_2$.

(Soda lime glass)

$SiO_2$: 65 to 80 mass%
$Al_2O_3$: 0 to 5 mass%
CaO: 5 to 15 mass%
MgO: 2 mass% or more
NaO: 10 to 18 mass%
$K_2O$: 0 to 5 mass%
MgO + CaO: 5 to 15 mass%
$Na_2O + K_2O$: 10 to 20 mass%
$SO_3$: 0.05 to 0.3 mass%
$B_2O_3$: 0 to 5 mass%
Total iron oxide in terms of $Fe_2O_3$ (T-$Fe_2O_3$): 0.02 to 0.03 mass%

(Green glass)

SiO$_2$: 65 to 80 mass%
Al$_2$O$_3$: 0 to 5 mass%
CaO: 5 to 15 mass%
MgO: 2 mass% or more
NaO: 10 to 18 mass%
K$_2$O: 0 to 5 mass%
MgO + CaO: 5 to 15 mass%
Na$_2$O + K$_2$O: 10 to 20 mass%
SO$_3$: 0.05 to 0.3 mass%
B$_2$O$_3$: 0 to 5 mass%
Total iron oxide in terms of Fe$_2$O$_3$ (T-Fe$_2$O$_3$): 0.4 to 0.6 mass%

(Dark green glass)

SiO$_2$: 65 to 80 mass%
Al$_2$O$_3$: 0 to 5 mass%
CaO: 5 to 15 mass%
MgO: 2 mass% or more
NaO: 10 to 18 mass%
K$_2$O: 0 to 5 mass%
MgO + CaO: 5 to 15 mass%
Na$_2$O + K$_2$O: 10 to 20 mass%
SO$_3$: 0.05 to 0.3 mass%
B$_2$O$_3$: 0 to 5 mass%
Total iron oxide in terms of Fe$_2$O$_3$ (T-Fe$_2$O$_3$): 0.7 to 1.3 mass%

For each of the glass plates 11 and 12, it is also possible to adjust the visible light transmittance. For this purpose, for example, the glass plates 11 and 12 are colored by adjusting the content of Fe$_2$O$_3$, whereby the visible light transmittance can be adjusted. For example, when the content of Fe$_2$O$_3$ is increased, the glass is colored green, and the above-mentioned green glass or dark green glass is obtained. On the other hand, when the content of Fe$_2$O$_3$ is small, the above-mentioned clear glass is obtained.

The thickness of the laminated glass 10 according to the present embodiment is not particularly limited, but the total thickness of the outer glass plate 11 and the inner glass plate 12 can be, for example, 2.1 to 6 mm. From the viewpoint of weight reduction, the total thickness of the outer glass plate 11 and the inner glass plate 12 is preferably 2.4 to 3.8 mm, more preferably 2.6 to 3.4 mm, and particularly preferably 2.7 to 3.2 mm.

The outer glass plate 11 is mainly required to have durability and impact resistance against external obstacles, and in the windshield of an automobile, the outer glass plate 11 is required to have impact resistance against flying objects such as pebbles. Meanwhile, a thicker outer glass plate 11 is not preferable because of increase in the weight. From this viewpoint, the thickness of the outer glass plate 11 is preferably 1.8 to 2.3 mm, and more preferably 1.9 to 2.1 mm. Which thickness should be adopted can be determined according to the application of the glass.

The thickness of the inner glass plate 12 can be set equal to that of the outer glass plate 11, or can be set smaller than that of the outer glass plate 11 in order to, for example, reduce the weight of the laminated glass 10. Specifically, in consideration of the strength of the glass, the thickness of the inner glass plate 12 is preferably 0.6 to 2.0 mm, preferably 0.8 to 1.6 mm, and particularly preferably 1.0 to 1.4 mm. Furthermore, the thickness of the inner glass plate 12 is preferably 0.8 to 1.3 mm. Which thickness should be adopted for each of the glass plates 11 and 12 will be described later.

As will be described in detail later, the laminated glass 10 is curved so as to be convexed to the vehicle exterior side. In this case, the thickness is measured at two positions including an upper part and a lower part of a center line (a curved line OP described later) extending in the vertical direction at the horizontal center of the laminated glass 10. The measuring instrument is not particularly limited, but for example, a thickness gauge such as SM-112 manufactured by TECLOCK Corporation can be used. At the time of the measurement, the laminated glass 10 is disposed so that the curved surface of the laminated glass 10 is placed on a flat surface, and the thickness is measured with the end of the laminated glass 10 being sandwiched by the thickness gauge.

<1-2. Interlayer film>

As illustrated in Fig. 3, an interlayer film 13 can be formed of three layers including a soft core layer 136 and a pair of outer layers 137 and 138 harder than the core layer 136 and sandwiching the core layer 136. However, the interlayer film 13 is not limited to this configuration, and may be formed of a plurality of layers including the core layer 136 and at least one outer layer disposed on the outer glass plate 11 side. Alternatively, the interlayer film 13 can be formed as one layer.

The hardness of the core layer 136 is not particularly limited as long as the core layer 136 is softer than the outer layers 137 and 138. The material that constitutes each of the layers 136 to 138 is not particularly limited, but for example, a material can be selected on the basis of the Young's modulus. Specifically, the Young's modulus of the core layer 136 is preferably 1 to 20 MPa, more preferably 1 to 18 MPa, and particularly preferably 1 to 14 MPa at a frequency of 100 Hz and a temperature of 20 degrees. When the Young's modulus is in the above-mentioned range, it is possible to prevent a decrease in the sound transmission loss (STL) in a low frequency range of approximately 3500 Hz or less. On the other hand, the Young's modulus of the outer layers 137 and 138 is preferably large in order to improve sound insulation performance in a high frequency range, and can be 560 MPa or more, 600 MPa or more, 650 MPa or more, 700 MPa or more, 750 MPa or more, 880 MPa or more, or 1300 MPa or more at a frequency of 100 Hz and a temperature of 20 degrees. The upper limit of the Young's modulus of the outer layer 522 is not particularly limited, but the Young's modulus can be set, for example, from the viewpoint of processability. For example, it is empirically known that if the Young's modulus is 1750 MPa or more, there is a difficulty in processability, particularly in cutting.

A specific material of the outer layers 137 and 138 can be, for example, a polyvinyl butyral resin (PVB). The polyvinyl butyral resin is preferable because it is excellent in adhesion to the outer glass plate 11 and penetration resistance. Meanwhile, the core layer 136 can be made of, for example, an ethylene vinyl acetate resin (EVA), or a polyvinyl acetal resin softer than the polyvinyl butyral resin that constitutes the outer layers. Since the outer layers sandwich the soft core layer therebetween, it is possible to greatly improve the sound insulation performance while maintaining the adhesion and penetration resistance equal to those of a single-layered resin interlayer film.

The thickness of the core layer 136 is not particularly limited, but is, for example, preferably 0.1 to 2.0 mm, and more preferably 0.1 to 0.6 mm. Meanwhile, the thickness of each of the outer layers 137 and 138 is not particularly limited, but is, for example, preferably 0.1 to 2.0 mm, and more preferably 0.1 to 1.0 mm.

<2. Mask layer>

Next, the mask layer 110 will be described. As illustrated in Figs. 1 and 2, in the present embodiment, the mask layer 110 is laminated on an inner surface 130 of the laminated glass 10 on the vehicle interior side (that is, on the inner surface of the inner glass plate 12), and is formed along a peripheral edge portion of the laminated glass 10. Specifically, as illustrated in Fig. 1, the mask layer 110 can be divided into a peripheral edge region 111 along the peripheral edge portion of the laminated glass 10, and a protruding region 112 protruding downward in a rectangular shape from the upper side portion of the laminated glass 10. The peripheral edge region 111 shields incidence of light from the peripheral edge portion of the windshield. Meanwhile, the protruding region 112 hides the imaging device 2 disposed in the vehicle from the outside of the vehicle.

However, if the mask layer 110 shields the imaging range of the imaging device 2, the imaging device 2 cannot capture an image of the outside situation in front of the vehicle. Therefore, in the present embodiment, the imaging window 113 having a rectangular shape is provided at a position corresponding to the imaging device 2 in the protruding region 112 of the mask layer 110 so that the imaging device 2 can image the situation outside the vehicle. That is, the imaging window 113 is a region without the mask layer 110, and a scene outside the vehicle can be imaged from inside the vehicle through the imaging window 113.

The mask layer 110 can be laminated on, for example, the inner surface of the outer glass plate 11 or the outer surface of the inner glass plate 12 in addition to being laminated on the inner surface of the inner glass plate 12 as described above. It is also possible to laminate the mask layer 110 on two places, that is, the inner surface of the outer glass plate 11 and the inner surface of the inner glass plate 12.

Next, a material of the mask layer 110 will be described. The material of the mask layer 110 may be appropriately selected according to the embodiment as long as the mask layer 110 can shield the visual field from the outside of the vehicle, and for example, a dark color ceramic such as a black, brown, gray, or deep blue ceramic may be used.

When a black ceramic is selected as the material of the mask layer 110, for example, the black ceramic is laminated on the peripheral edge portion of the inner surface 130 of the inner glass plate 12 by screen printing or the like, and the laminated ceramic is heated together with the inner glass plate 12. As a result, the mask layer 110 can be formed on the peripheral edge portion of the inner glass plate 12. Further, when the black ceramic is printed, a region where the black ceramic is not printed is partially provided. As a result, the imaging window 113 can be formed. Various materials can be used as the ceramic used in the mask layer 110. For example, a ceramic having a composition shown in Table 1 below can be used in the mask layer 110.

[Table 1]

| | | First and second colored ceramic pastes |
|---|---|---|
| Pigment *1 | mass% | 10 |
| Resin (cellulose resin) | mass% | 10 |
| Organic solvent (pine oil) | mass% | 10 |
| Glass binder *2 | mass% | 70 |
| Viscosity | dPs | 150 |
| *1, Main component: copper oxide, chromium oxide, iron oxide, and manganese oxide<br>*2, Main component: Bismuth borosilicate, zinc borosilicate | | |

<3. In-vehicle system>

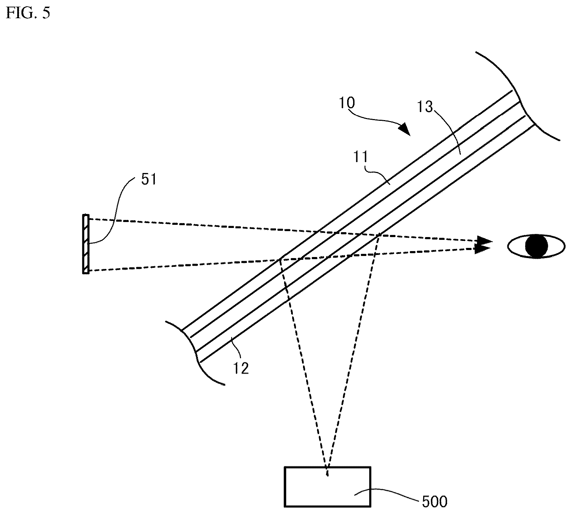

Next, the in-vehicle system 5 including the imaging device 2 and the image processing device 3 will be described with reference to Fig. 5. Fig. 5 illustrates a configuration of the in-vehicle system 5. As illustrated in Fig. 5, the in-vehicle system 5 according to the present embodiment includes the imaging device 2, and the image processing device 3 connected to the imaging device 2.

The image processing device 3 is a device that processes a captured image acquired by the imaging device 2. The image processing device 3 has, for example, as a hardware configuration, general hardware such as a storage unit 31, a control unit 32, and an input/output unit 33 that are connected by a bus. However, the hardware configuration of the image processing device 3 is not limited to this example, and regarding the specific hardware configuration of the image processing device 3, components can be added, omitted, and added as appropriate according to the embodiment.

The storage unit 31 stores various data and programs (not illustrated) used in the processing executed by the control unit 32. The storage unit 31 may be implemented, for example, by a hard disk or a recording medium such as a USB memory. Furthermore, the various data and programs stored in the storage unit 31 may be acquired from a recording medium such as a compact disc (CD) or a digital versatile disc (DVD). Furthermore, the storage unit 31 may be referred to as an auxiliary storage device.

As described above, the laminated glass 10 is disposed in an inclined posture with respect to the perpendicular direction and is curved. The imaging device 2 captures an image of the situation outside the vehicle through the laminated glass 10. Therefore, the captured image acquired by the imaging device 2 is deformed according to the posture, shape, refractive index, optical defect, and the like of the laminated glass 10. Aberrations intrinsic to the camera lens of the imaging device 2 also occur. Therefore, the storage unit 31 may store correction data for correcting an image deformed by such aberrations of the laminated glass 10 and the camera lens.

The control unit 32 includes one or a plurality of processors such as a microprocessor or a central processing unit (CPU), and a peripheral circuit (such as a read only memory (ROM), a random access memory (RAM), or an interface circuit) used for the processing of the processor. The ROM, the RAM, and the like may be referred to as a main storage device in the sense that they are disposed in an address space handled by the processor in the control unit 32. The control unit 32 functions as an image processing unit 321 by executing various data and programs stored in the storage unit 31.

The image processing unit 321 processes a captured image acquired by the imaging device 2. The processing of the captured image can be appropriately selected according to the embodiment. For example, the image processing unit 321 may analyze the captured image by pattern matching or the like to recognize a subject appearing in the captured image. In the present embodiment, since the imaging device 2 captures an image of the situation in front of the vehicle, the image processing unit 321 may further determine whether or not a living organism such as a human appears in the captured image of the front of the vehicle on the basis of the subject recognition. Then, in a case where a person appears in the captured image of the front of the vehicle, the image processing unit 321 may output a warning message by a predetermined method. Furthermore, for example, the image processing unit 321 may subject the captured image to predetermined processing. Then, the image processing unit 321 may output the processed captured image to a display device (not illustrated) such as a display connected to the image processing device 3.

The input/output unit 33 is one or a plurality of interfaces for transmitting/receiving data to/from a device present outside the image processing device 3. The input/output unit 33 is, for example, an interface for connection with a user interface, or an interface such as a universal serial bus (USB). Note that, in the present embodiment, the image processing device 3 is connected to the imaging device 2 via the input/output unit 33, and acquires the captured image captured by the imaging device 2.

As the image processing device 3, in addition to a device designed exclusively for a service to be provided, a general-purpose device such as a personal computer (PC) or a tablet terminal may be used.

In addition, the imaging device 2 is attached to a bracket (not illustrated), and the bracket is attached to the mask layer 110. Therefore, in this state, the attachment of the imaging device 2 to the bracket and the attachment of the bracket to the mask layer are adjusted so that the optical axis of the camera of the imaging device 2 passes through the imaging window 113. A cover (not illustrated) is attached to the bracket so as to cover the imaging device 2. Therefore, the imaging device 2 is disposed in a space surrounded by the laminated glass 10, the bracket, and the cover, so that the imaging device 2 is not visible from the vehicle interior side and only partially visible from the vehicle exterior side through the imaging window 113. The imaging device 2 and the above-mentioned input/output unit 33 are connected by a cable (not illustrated), and the cable is pulled out from the cover and connected to the image processing device 3 disposed at a predetermined position in the vehicle.

<4. HUD device>

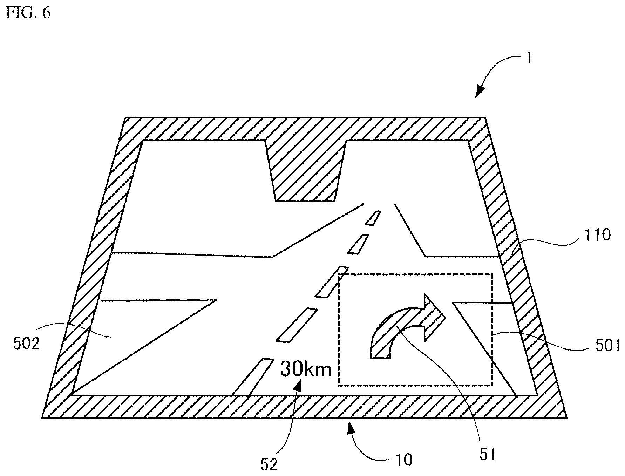

Next, the HUD device 500 will be described with reference to Figs. 5 and 6. As illustrated in Fig. 5, the HUD device 500 according to the present embodiment displays, as virtual images, a first image and a second image on the windshield 1. A first image 51 is an image for augmented reality (AR) display, and is displayed so as to be superimposed on a target object included in the outside view. The target object is an object included in an outside view seen through the laminated glass 10, and is, for example, a road, a building, a pedestrian, a front vehicle, transportation equipment, a road sign, or the like. The first image 51 is a figure such as an arrow as illustrated in Fig. 6 or a character, and is displayed so as to be superimposed on a road in an outside view in this example. That is, the first image 51 is displayed so as to be formed on the target object at a position approximately 3 m or more away from driver's eyes. The first image 51 is movable in the visual field of the driver following the target object so as to be relatively fixed to the target object. Therefore, the relative positional relation among the driver's eyes, the target object in the outside view, and the first image 51 is continuously maintained. Therefore, the shape of the first image 51 may be continuously updated at a predetermined cycle in accordance with the relative position and shape of the target object. The first image 51 as described above is displayed by projecting the image light emitted from the HUD device 500 on an ARHUD region 501 of the laminated glass 10.

Meanwhile, a second image 52 is displayed so as to be formed on the laminated glass 10 instead of being superimposed on the target object in the outside view. The second image 52 can also be a figure or a character similarly to the first image 51, but in the present embodiment, as an example, the second image 52 is a numerical value indicating the speed of the vehicle. The second image 52 as described above is displayed by projecting the image light emitted from the HUD device 500 on an outer region 502 other than the ARHUD region 501 of the laminated glass 10.

<5. ARHUD region>

Next, the ARHUD region 501 for displaying the first image 51 on the laminated glass 10 will be described. The ARHUD region 501 in the present embodiment is formed in a rectangular shape, and is provided at the lower right of the laminated glass 10 (the lower left in the case of a left-hand drive car). However, the present invention is not limited thereto, and the ARHUD region 501 can be provided at other positions. The size of the ARHUD region 501 is, for example, preferably an area of 50 mm $\times$ 50 mm or more, and more preferably an area of 100 mm $\times$ 100 mm or more.

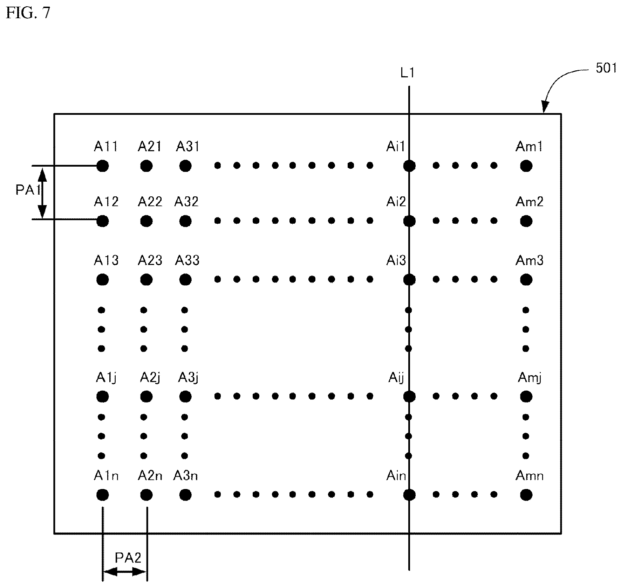

In the present embodiment, slopes relating to the surface shape of the laminated glass 10 are defined, and the longitudinal difference and the lateral difference between the slopes are each set to a predetermined value or less, so that an appropriate image can be displayed on the ARHUD region 501. First, in the surface of the laminated glass 10 on the vehicle interior side, a region where the ARHUD region 501 was provided was defined as follows. First, as illustrated in Fig. 7, in the ARHUD region 501, m points in the horizontal direction and n points in the perpendicular direction, that is, a total of $m \times n$ points Aij $(1 \leq i \leq m, 1 \leq j \leq n)$ arranged in a lattice pattern are defined. As for the points Aij, the perpendicular pitch PA1 can be set, for example, to 5 to 20 mm, and the horizontal pitch PA2 can be set, for example, to 5 to 20 mm.

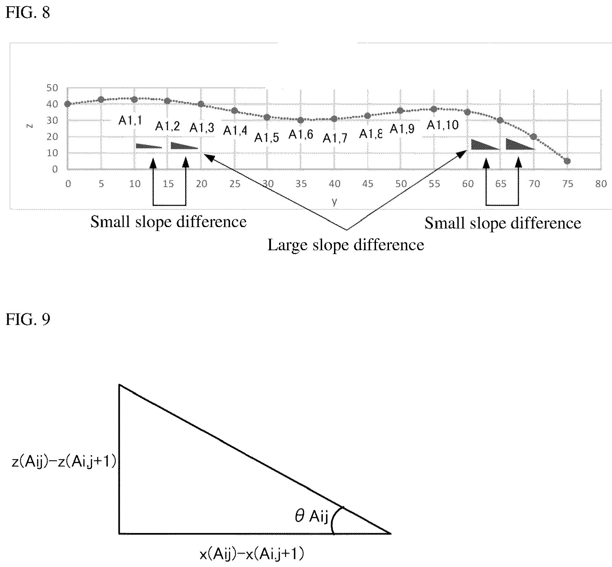

Next, an inclination angle $\theta$Aij of the surface of the laminated glass 10 between adjacent points Aij and Ai(j + 1) is calculated. The obtained value is the slope. In this case, the surface of the inner glass plate 12 on the vehicle interior side is traced on m perpendicular lines L1 passing through the points Aij as illustrated in Fig. 7, and the unevenness of the surface is detected as illustrated in Fig. 8, for example. On the basis of the coordinates obtained by the detection, the inclination angle $\theta$Aij (rad) is calculated according to the following expression as illustrated in, for example, Fig. 9.

$$\theta Aij \approx \tan\theta \approx ((z(Aij) - z(Ai(j + 1)))/(x(Aij) - x(Ai(j + 1)),$$

wherein $1 \leq i \leq m$ and $1 \leq j \leq n - 1$

In the expression, x(Aij) is the coordinates of the points Aij in the plane direction, and z(Aij) is the coordinates of the points Aij in the thickness direction of the laminated glass 10. Note that, since (z(Aij) - z(Ai(j + 1))) used for calculating $\theta$Aij is a

difference between coordinates, the origin of the coordinates zAij in the thickness direction can be set at an arbitrary position. For example, the coordinate at some corner of the surface of the inner glass plate 12 on the vehicle exterior side can be set as the origin.

In this way, n - 1 inclination angles θAij are obtained on each of the perpendicular lines L1. Since there are m perpendicular lines, a total of m × (n - 1) inclination angles θAij are obtained.

Next, a longitudinal difference X1 between the slopes (inclination angles θAij) is calculated. X1 is a value obtained by dividing a difference between two angles, that is, an angle θAij and another angle θAij (excluding angles at points at an identical position in the horizontal direction) by a distance (mm) between two points corresponding to the two angles in the perpendicular direction. As a result, m × (n - 1) - 1 slope differences X1 are obtained. For example, since the perpendicular distance between θA11 and θA12 is PA1, the slope difference X1 between θA11 and θA12 is (θA11 - θA12)/P1. In addition, for example, since the perpendicular distance between θA11 and θAmn is PA1 × (n - 1), the slope difference X1 between θA11 and θAmn is (θA11 - θAmn)/(PA1 × (n - 1)). Alternatively, for example, since the perpendicular distance between θA23 and θA45 is PA1 × 2, the slope difference X1 between θA23 and θA45 is (θA23 - θA45)/(PA1 × 2). However, when the perpendicular distance is 0 as in, for example, θA11 and θA21, the longitudinal difference X1 between the slopes is not calculated.

All the longitudinal differences X1 between the slopes thus calculated satisfy the following expression (1).

$$X1 < 0.0008 \ (\text{rad/mm}) \ (1)$$

X1 is preferably less than 0.0004, more preferably less than 0.0001, and particularly preferably less than 0.00008.

Next, a method of calculating the lateral difference Y1 between the slopes will be described. Y1 is a value obtained by dividing a difference between two angles, that is, an angle θAij and another angle θAij by a distance (mm) between two points corresponding to the two angles in the horizontal direction. As a result, m × (n - 1) - 1 slope differences Y1 are obtained. For example, since the horizontal distance between θA11 and θA21 is PA2, the slope difference Y1 between θA11 and θA21 is (θA11 - θA21)/P2. In addition, for example, since the horizontal distance between θA11 and θAmn is PA2 × (m - 1), the slope difference Y1 between θA11 and θAmn is (θA11 - θAmn)/(PA2 × (m - 1)). Alternatively, for example, since the horizontal distance between θA23 and θA45 is PA2 × 2, the slope difference Y1 between θA23 and θA45 is (θA23 - θA45)/(PA2 × 2). However, when the horizontal distance is 0 as in, for example, θA11 and θA12, the slope difference Y1 is not calculated.

All the lateral differences Y1 between the slopes thus calculated satisfy the following expression (2).

$$Y1 < 0.0003 \ (\text{rad/mm}) \ (2)$$

Y1 is preferably less than 0.0001, more preferably less than 0.00008, and particularly preferably less than 0.00006.

It is preferable to appropriately combine the examples of the upper limits represented by the expressions (1) and (2). For example, combinations such as X1 < 0.004 and Y1 < 0.0001 can be used. In addition, as illustrated for Sample 1 described later, X1 can be 0.00006 (rad/mm) or less and Y1 can be 0.00005 (rad/mm) or less. In addition, as illustrated for Sample 2 described later, X1 can be 0.00029 (rad/mm) or less and Y1 can be 0.00007 (rad/mm) or less.

<6. Outer region>

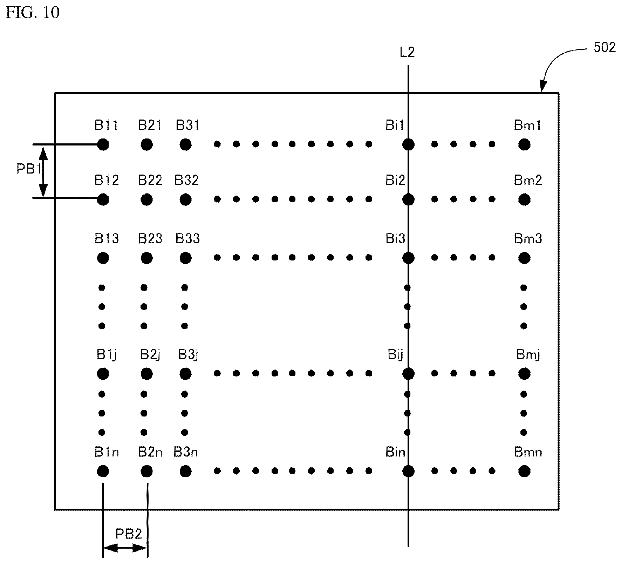

Next, the surface shape of the outer region 502 for displaying the second image 52 on the laminated glass 10 will be described. In the outer region 502, the longitudinal difference X2 between the slopes and the lateral difference Y2 between the slopes are similarly calculated. As illustrated in Fig. 10, a rectangular region is defined at an arbitrary position in the outer region 502, and points Bij are defined in this region similarly to the points in the ARHUD region 501. Subsequently, the longitudinal difference X2 between the slopes and the lateral difference Y2 between the slopes are calculated in the same manner as in the ARHUD region 501.

All the longitudinal differences X2 and the lateral differences Y2 between the slopes thus calculated satisfy the following expressions (3) and (4), respectively.

$$0.0008 \ (\text{rad/mm}) < X2 < 0.0015 \ (\text{rad/mm}) \ (3)$$

$$0.0003 \ (\text{rad/mm}) < Y2 < 0.0010 \ (\text{rad/mm}) \ (4)$$

Further, it is more preferable that the longitudinal differences X2 and the lateral differences Y2 satisfy the following expressions (5) and (6), respectively.

$$0.0008 \ (rad/mm) < X2 < 0.0010 \ (rad/mm) \ (5)$$

$$0.0005 \ (rad/mm) < Y2 < 0.0008 \ (rad/mm) \ (6)$$

The upper limits and the lower limits in the expressions (3) to (6) can be appropriately combined.

<7. Method for manufacturing windshield>

Next, an example of a method for manufacturing the windshield having the above-mentioned configuration will be described. First, a method for manufacturing the laminated glass 10 will be described.

First, the above-mentioned mask layer 110 is laminated on at least one of the outer glass plate 11 and the inner glass plate 12 each having a flat plate shape. Next, the glass plates 11 and 12 are formed so as to be curved. The forming method is not particularly limited, and a known method can be adopted. For example, after the flat plate-shaped glass plate passes through a heating furnace, the glass plate can be formed into a curved shape by pressing with an upper die and a lower die.

After the outer glass plate 11 and the inner glass plate 12 are formed into a curved shape as described above, subsequently, the interlayer film 13 described above is sandwiched between the outer glass plate 11 and the inner glass plate 12. The laminate is put in a rubber bag, and preliminarily bonded at about 70 to 110°C while being sucked under reduced pressure. At this time, a reflective film 135 that constitutes the interlayer film 13, films that constitute adhesive layers 131 and 132, and the like are stacked and disposed between both the glass plates 11 and 12. Other methods can also be employed for the preliminary bonding. For example, the interlayer film 13 is sandwiched between the outer glass plate 11 and the inner glass plate 12, and heated at 45 to 65°C by an oven. Subsequently, the laminated glass is pressed with a roll at 0.45 to 0.55 MPa. Next, the laminated glass is heated again at 80 to 105°C by an oven, and then pressed again by a roll at 0.45 to 0.55 MPa. In this way, the preliminary bonding is completed.

Next, permanent bonding is performed. The preliminarily bonded laminated glass is permanently bonded by an autoclave at, for example, 8 to 15 atm and 100 to 150°C. Specifically, for example, the permanent bonding can be performed under the conditions of 14 atm and 145°C. Thus, the windshield 1 according to the present embodiment is manufactured.

The slope difference can be set equal to or less than the predetermined value as described above, for example, by making the surface of the upper die in pressing as flat as possible.

<8. Features>

With use of the windshield 1 described above, the following effects can be obtained.

(1) The present inventors have found that, in order to improve the image quality of an image obtained by projecting image light emitted from the HUD device 500, it is important that there is no locally steep portion in the angle of unevenness of the surface of the inner glass plate 12 rather than in a mere unevenness value (for example, surface roughness) of the surface of the laminated glass 10. In particular, the first image 51 that is an AR image is displayed so as to be formed at a position approximately 3 m or more away from the driver so that the first image 51 is superimposed on a target object outside the vehicle. Therefore, if a steep portion exists in the surface of the inner glass plate 12, a deviation from, for example, the first image 51 to be superimposed such as a figure may occur, and the appearance may be deteriorated.

To cope with this problem, as described above, the present inventors have found that the distortion of the first image 51 can be reduced by satisfying the expression (1) related to the longitudinal difference X1 between the slopes and the expression (2) related to the lateral difference Y1 between the slopes in the ARHUD region 501. For X1 and Y1, not only the difference X1 between adjacent slopes such as $\theta 11$ and $\theta 12$ but also the difference X1 between distant slopes such as $\theta 11$ and $\theta 45$ is calculated. In a case where the longitudinal difference X1 between adjacent slopes is large, distortion may occur in the first image 51 (arrow), for example. Meanwhile, for example, as illustrated in Fig. 8, even if the longitudinal difference X1 between adjacent slopes is small, in a case where the longitudinal difference X1 between the slopes at distant places is large, a difference in distortion occurs between the first images 51 displayed at distant places, and the user may feel uncomfortable.

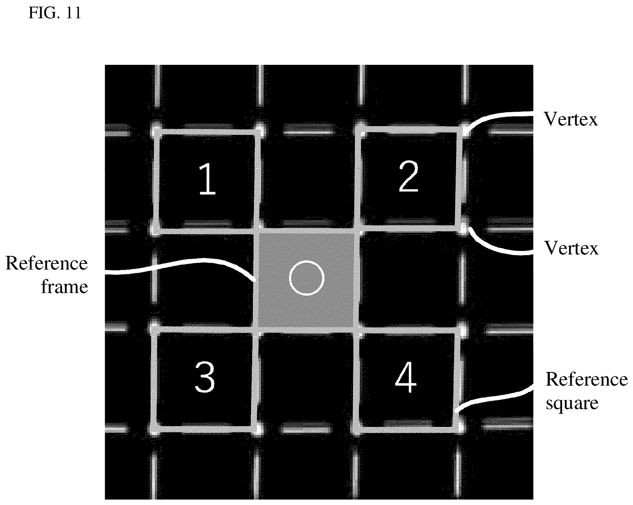

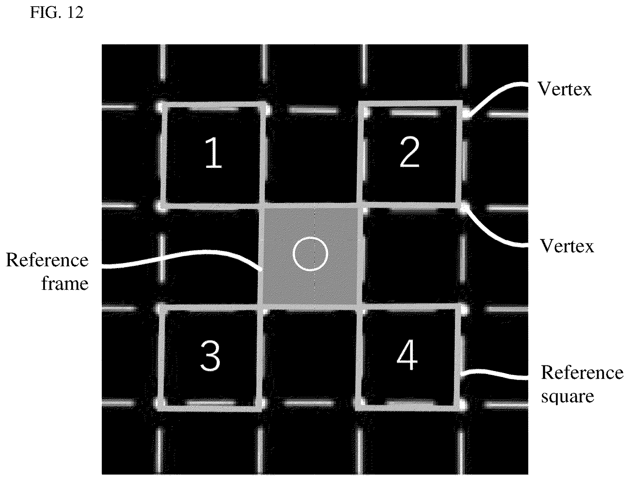

Here, Sample 1 in which X1 is 0.00006 (rad/mm) and Y1 is 0.00005 (rad/mm) is compared with Sample 2 in which X1 is 0.00029 (rad/mm) and Y1 is 0.00007 (rad/mm). Fig. 11 illustrates Sample 1, and Fig. 12 illustrates Sample 2. In order to evaluate the distortion, in each sample, a lattice pattern in which each square had a side of 14 mm was provided to a range used as the ARHUD region 501. Then, a rectangular frame with a circle was used as a reference frame, and four frames 1 to 4 each sharing a vertex with the reference frame were selected. Four accurate reference squares (squares indicated by solid lines) each sharing a vertex with the reference frame were individually superimposed on the frames 1 to 4, and positional deviation of the vertices of the frames 1 to 4 and parallelism of each side were examined.

Sample 1 illustrated in Fig. 11 has a small X1, and thus there is almost no deviation of the vertex and each side of the frames 1 to 4 from the reference square. In contrast, in Sample 2 illustrated in Fig. 12, since X1 is larger than that of Sample 1, the deviation of the vertex and each side of the frames 1 to 4 from the reference square is larger than that of Sample 1. However, since X1 of Sample 2 is still smaller than the defined value of the above-mentioned expression (1), the present inventors have confirmed that there is no problem with the distortion of the first image.

Since the windshield 1 is inclined in the front-back direction, the longitudinal difference between the slopes tends to affect the depth of the first image 51, and therefore, X1 tends to be larger than Y1. Therefore, in the present embodiment, the upper limit of X1 is set larger than the upper limit of Y1. The present inventors have confirmed that the above-mentioned effect can still be obtained even in such a case. The same applies to the relation between X2 and Y2.

(2) The same applies to the slope differences in the outer region 502. However, in the outer region 502, instead of the AR image, the second image 52 is displayed so as to be formed on the windshield 1. Therefore, the influence of distortion due to the surface shape of the inner glass plate 12 is smaller than in the first image 51 that is displayed so as to be formed outside the vehicle. From this viewpoint, the present inventors have found that the distortion of the second image 52 can be reduced in the outer region 502 when the above-mentioned expressions (3) and (4) are satisfied.

For example, in Sample 1, when X2 and Y2 were measured in the outer region 502 outside the ARHUD region 501, X2 was 0.00086 (rad/mm) and Y2 was 0.00066 (rad/mm), and satisfied the expressions (3) and (4), respectively. When the second image (numerical value) was projected on the outer region 502 of Sample 1, no distortion was visually recognized.

<9. Modification>

Although one embodiment of the present invention has been described above, the present invention is not limited to the above-mentioned embodiment, and various modifications can be made without departing from the gist thereof. Note that the following modifications can be appropriately combined. In addition, the following modifications can be appropriately combined with the above-mentioned embodiment.

<9-1>
The position and the number of the points A and B in the ARHUD region 501 and the outer region 502 described above are not particularly limited. Even if the position and the number of the points A and B are different from those in the embodiment, an equivalent result can be obtained regardless of the positions of the points A and B and the like since the slope difference is obtained by dividing the difference between two angles by the pitch between the points A or between the points B. Further, positions where the ARHUD region 501 and the outer region 502 are formed are not particularly limited, and the ARHUD region 501 and the outer region 502 can be appropriately provided so as to correspond to positions where the first image 51 and the second image 52 are displayed, respectively.

<9-2>
In the above-mentioned embodiment, the slope differences X1 and Y1 in the ARHUD region satisfy the expressions (1) and (2), respectively. However, as described above, considering that the longitudinal difference between the slopes in the unevenness of the surface of the inner glass plate 12 more intensely affects the distortion of the AR image 51, it is sufficient that at least the expression (1) is satisfied if not both the expressions (1) and (2) are satisfied.

<9-3>
In the above-mentioned embodiment, both the differences X1 and Y1 between the slopes in the ARHUD region are smaller than the differences X2 and Y2 between the slopes in the outer region 502, respectively, but for example, it is sufficient that either one of X1 < X2 and Y1 < Y2 is satisfied.

<9-4>
The shape of the mask layer 110 is an example, and the configuration is not particularly limited. The shape of the mask layer 110 can be appropriately changed according to a device or the like in which the mask layer 110 is provided.

<9-5>
In the above-mentioned embodiment, the imaging window 113 is formed in the mask layer 110 and the imaging device 2 is disposed, but the imaging window 113 and the imaging device 2 do not have to be provided.

<9-6>
In the inner glass plate 12, the position (height) at which the first image 51 is displayed can be varied by adjustment of the HUD device 500.

<9-7>

The laminated glass 10 can be formed so that its longitudinal section has a wedge shape. In this case, at least one of the outer glass plate, the inner glass plate, and the interlayer film can be formed into a wedge shape. In such a case, in the ARHUD region, when the points Aij are defined at a pitch of 20 mm or less, and the wedge angle at each of the points Aij is measured in the surface of the windshield on the vehicle interior side by an interferometer (where m and n are each 240 or more), the difference between the maximum value and the minimum value of the wedge angles can be set to 0.32 mrad or less.

Reference Signs List

1 Windshield
11 Outer glass plate
12 Inner glass plate
13 Interlayer film
131 First adhesive layer
132 Second adhesive layer
135 Reflective film

**Claims**

1. A windshield having an ARHUD region for displaying, superimposed on an outside view seen from outside a vehicle, a first image emitted from a head-up display device,

   the windshield comprising a glass member having a plate shape and having the ARHUD region,
   wherein in the ARHUD region, when slopes relating to a surface shape of the glass member are defined and a longitudinal difference between the slopes is defined as X1, the windshield satisfies an expression shown below:

$$X1 < 0.0008 \ (\mathrm{rad/mm})$$

   wherein in the ARHUD region,
   when m points in a horizontal direction and n points in a perpendicular direction, that is, a total of m $\times$ n points Aij ($1 \leq i \leq m$, $1 \leq j \leq n$) arranged in a lattice pattern are defined, and
   in a surface of the glass member on a vehicle interior side, an inclination angle, that is, a slope between perpendicularly adjacent points Aij and Ai(j + 1) ($1 \leq i \leq m$, $1 \leq j \leq n - 1$) is defined as $\theta$Aij (rad),
   X1 is a value obtained by dividing a difference between two angles, that is, an arbitrary angle $\theta$Aij and another angle $\theta$Aij (excluding angles at points at an identical position in the horizontal direction) by a distance between two points corresponding to the two angles in the perpendicular direction.

2. The windshield according to claim 1, wherein in the ARHUD region, when a lateral difference between the slopes is defined as Y1, the windshield satisfies an expression shown below:

$$Y1 < 0.0003 \ (\mathrm{rad/mm})$$

   wherein Y1 is a value obtained by dividing a difference between two angles, that is, an arbitrary angle $\theta$A11 and another angle $\theta$Aij (excluding angles at points at an identical position in the perpendicular direction) by a distance between two points corresponding to the two angles in the horizontal direction.

3. The windshield according to claim 1, wherein in an outer region other than the ARHUD region, when a longitudinal difference between the slopes is defined as X2, and a lateral difference between the slopes is defined as Y2, the windshield satisfies at least one of expressions shown below:

$$X1 < X2;$$

   and

$$Y1 < Y2$$

wherein in the outer region,
when m points in the horizontal direction and n points in the perpendicular direction, that is, a total of $m \times n$ points $B_{ij}$ ($1 \le i \le m$, $1 \le j \le n$) arranged in a lattice pattern are defined, and
in the surface of the glass member on the vehicle interior side, an inclination angle between perpendicularly adjacent points $B_{ij}$ and $B_{i, j+1}$ ($1 \le i \le m$, $1 \le j \le n-1$) is defined as $\theta B_{ij}$ (rad),
X2 is a value obtained by dividing a difference between two angles, that is, an arbitrary angle $\theta B_{ij}$ and another angle $\theta B_{ij}$ (excluding angles at points at an identical position in the horizontal direction) by a distance between two points corresponding to the two angles in the perpendicular direction, and
Y2 is a value obtained by dividing a difference between two angles, that is, an arbitrary angle $\theta B_{ij}$ and another angle $\theta B_{ij}$ (excluding angles at points at an identical position in the perpendicular direction) by a distance between two points corresponding to the two angles in the horizontal direction.

4.  The windshield according to claim 3, which satisfies

$$0.0008 \ (\mathrm{rad/mm}) < X2 < 0.0015 \ (\mathrm{rad/mm}),$$

and

$$0.0003 \ (\mathrm{rad/mm}) < Y2 < 0.0010 \ (\mathrm{rad/mm}).$$

5.  The windshield according to claim 1, wherein the glass member includes:

    an inner glass plate;
    an outer glass plate disposed to face the inner glass plate; and
    an interlayer film that bonds the inner glass plate and the outer glass plate to each other.

6.  The windshield according to claim 3, wherein a second image emitted from the head-up display device is displayed in the outer region.

7.  The windshield according to claim 1, wherein

    in the ARHUD region, the points $A_{ij}$ are defined at a pitch of 20 mm or less, and
    when a wedge angle at each of the points $A_{ij}$ is measured in the surface of the glass member on the vehicle interior side by an interferometer (where m and n are each 240 or more), a difference between a maximum value and a minimum value of the wedge angles is 0.32 mrad or less.

8.  The windshield according to claim 1, wherein the first image is formed 3 m or more ahead of a driver.

9.  The windshield according to claim 1, wherein the ARHUD region has an area of 50 mm $\times$ 50 mm or more.

10. The windshield according to claim 1, wherein

    the first image is at least one of a character and a figure, and
    the first image is superimposed on at least one of a building, a road, a pedestrian, and transportation equipment included in the outside view.

11. The windshield according to claim 1, wherein a height of the first image displayed on the glass member is variable.

FIG. 1

FIG. 2

Vehicle exterior side                    Vehicle interior side

FIG. 3

FIG. 4

FIG. 5

FIG. 6

FIG. 7

FIG. 8

Small slope difference

Large slope difference

Small slope difference

FIG. 9

FIG. 10

FIG. 11

FIG. 12

## INTERNATIONAL SEARCH REPORT

| International application No. |
| --- |
| **PCT/JP2024/003786** |

| | |
| --- | --- |
| **A.** | **CLASSIFICATION OF SUBJECT MATTER** |
| | *G02B 27/01*(2006.01)i; *B60J 1/00*(2006.01)i; *B60J 1/02*(2006.01)i; *B60K 35/23*(2024.01)i; *C03C 27/12*(2006.01)i<br>FI:  G02B27/01; B60K35/23; B60J1/02 M; B60J1/00 H; C03C27/12 Z |

According to International Patent Classification (IPC) or to both national classification and IPC

| | |
| --- | --- |
| **B.** | **FIELDS SEARCHED** |

Minimum documentation searched (classification system followed by classification symbols)

G02B27/01; B60J1/00; B60J1/02; B60K35/23; C03C27/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2019-182738 A (AGC INC.) 24 October 2019 (2019-10-24) | 1-3, 5, 9 |
| | paragraphs [0011]-[0051], fig. 1-6 | |
| Y | paragraphs [0011]-[0051], fig. 1-6 | 3, 6-8, 10-11 |
| A | paragraphs [0011]-[0051], fig. 1-6 | 4 |
| X | WO 2020/250939 A1 (SEKISUI CHEMICAL CO., LTD.) 17 December 2020 (2020-12-17) | 1-2, 5, 9 |
| | paragraphs [0035]-[0126], [0248]-[0256], fig. 1-5 | |
| Y | paragraphs [0035]-[0126], [0248]-[0256], fig. 1-5 | 3, 6-8, 10-11 |
| A | paragraphs [0035]-[0126], [0248]-[0256], fig. 1-5 | 4 |
| Y | WO 2018/185956 A1 (MITSUBISHI ELECTRIC CORPORATION) 11 October 2018 (2018-10-11) | 6, 10-11 |
| | paragraphs [0013]-[0067], fig. 1-11 | |
| Y | JP 6770470 B2 (NIPPON SHEET GLASS COMPANY, LIMITED) 14 October 2020 (2020-10-14) | 3, 7 |
| | paragraphs [0020]-[0086], fig. 1-27B | |

| ✓ Further documents are listed in the continuation of Box C. | ✓ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **22 March 2024** | **02 April 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

| International application No. |
| --- |
| **PCT/JP2024/003786** |

### C.    DOCUMENTS CONSIDERED TO BE RELEVANT

| Category* | Citation of document, with indication, where appropriate, of the relevant passages | Relevant to claim No. |
| --- | --- | --- |
| Y | CN 114740627 A (FUYAO GLASS INDUSTRY GROUP CO., LTD.) 12 July 2022 (2022-07-12)<br>     paragraphs [0104], [0153], fig. 1 | 8 |

Form PCT/ISA/210 (second sheet) (July 2022)

**INTERNATIONAL SEARCH REPORT**
Information on patent family members

International application No.

**PCT/JP2024/003786**

| Patent document cited in search report | | | Publication date (day/month/year) | Patent family member(s) | | | Publication date (day/month/year) |
|---|---|---|---|---|---|---|---|
| JP | 2019-182738 | A | 24 October 2019 | US | 2019/0299752 | A1 | |
| | | | | paragraphs [0019]-[0057], fig. 1-6C | | | |
| | | | | DE | 102019108385 | A1 | |
| | | | | CN | 110341598 | A | |
| WO | 2020/250939 | A1 | 17 December 2020 | US | 2022/0227108 | A1 | |
| | | | | paragraphs [0043]-[0134], [0255]-[0263], fig. 1-5 | | | |
| | | | | EP | 3984976 | A1 | |
| | | | | CN | 113993826 | A | |
| | | | | KR | 10-2022-0021922 | A | |
| | | | | TW | 202108376 | A | |
| WO | 2018/185956 | A1 | 11 October 2018 | (Family: none) | | | |
| JP | 6770470 | B2 | 14 October 2020 | US | 2020/0018954 | A1 | |
| | | | | paragraphs [0071]-[0172], fig. 1-27B | | | |
| | | | | EP | 3604005 | A1 | |
| | | | | CN | 110475684 | A | |
| | | | | KR | 10-2019-0127757 | A | |
| CN | 114740627 | A | 12 July 2022 | (Family: none) | | | |

Form PCT/ISA/210 (patent family annex) (July 2022)

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021104803 A